# EUROPEAN PATENT APPLICATION

(11) **EP 4 826 310 A1**
(43) Date of publication of application: **21.10.2026**
(21) Application number: 24904188.0
(22) Date of filing: 06.12.2024
(51) Int. Cl.: F25B 23/00, F28F 13/18, B32B 7/023, B32B 7/12, B32B 27/08, B32B 27/36, C09J 133/00, C09J 183/04, C09J 175/04

(54) **COLOR LAMINATE FOR RADIATIVE COOLING AND RADIATIVE COOLING MATERIAL INCLUDING SAME**

(30) Priority: 11.12.2023 KR 20230179086
(71) Applicant: Hyundai Motor Company, Seoul 06797 (KR); Kia Corporation, Seoul 06797 (KR)
(72) Inventor: LEE, Min Jae, Hwaseong-si, Gyeonggi-do 18280 (KR)
(74) Representative: Viering, Jentschura & Partner mbB Patent- und Rechtsanwälte
(86) International application number: PCT/KR2024/019954
(87) International publication number: WO 2025/127623

(57) **Abstract**

The present invention relates to a color laminate for radiative cooling and a radiative cooling material including same, the color laminate comprising: a colored layer comprising a first thermoplastic resin; a first light reflection layer formed on the colored layer and having a reflectance of 80% or more with respect to light having a wavelength of 780 to 1,300 nm and a transmittance of 70% or more with respect to visible light having a wavelength of 400 to 780 nm; a second light reflection layer which is formed on the first light reflection layer and in which a first metal protection layer, a metal layer, and a second metal protection layer are sequentially laminated; an adhesive layer formed on the second light reflective layer; and an infrared radiation layer formed on the adhesive layer.

## Description

### TECHNICAL FIELD

The present disclosure relates to a colored laminate for radiative cooling which has excellent visible light and infrared-ray reflectance, excellent infrared-ray radiation, excellent cooling effect, and excellent color, and thus is suitable for a vehicle exterior, and a radiative cooling material including the same.

### [Cross-Reference to Related Applications]

This application claims the benefit of Korean Patent Application No. 10-2023-0179086, filed on December 11, 2023, which application is hereby incorporated herein by reference.

### BACKGROUND

In general, energy consumption is essential for cooling. For example, a general-purpose cooling apparatus, such as a refrigerator and an air conditioner, uses energy to compress refrigerant and then performs the cooling using absorption of heat generated when the compressed refrigerant expands. Unlike the general-purpose cooling apparatus, radiative cooling is a technology that may perform the cooling without wasting the energy. To improve a radiative cooling efficiency, it is important to well control the absorption, reflection, and radiation of light in each wavelength band. Most heat is generated from incident sunlight. The sunlight is divided into ultraviolet (UV) light, visible light, and infrared light. When reflecting light in each wavelength band, inflow of the heat via the sunlight may be blocked. For example, an internal temperature of a black vehicle that absorbs light well during a sunny day increases easily, but an internal temperature of a white vehicle that reflects light well rather than absorbs the same increases relatively slowly.

A variety of materials, such as a polymer, a multi-layer thin film made of an inorganic material or a ceramic material, a component for the radiative cooling including a metal reflective layer, and a paint containing a white pigment, are used as a material for the radiative cooling. The polymer material generally has a high absorptivity (an emissivity) for the infrared light, but it is easily deteriorated by ultraviolet light, moisture, and the like when left outdoors because of a nature thereof and thus has a short lifespan. In the case of the multi-layer thin film, the number of layers must be increased to increase the emissivity for the infrared light, which increases an absorptivity of the sunlight, making it difficult to achieve a high-efficiency radiative cooling performance. In addition, the material including the metal reflective layer is difficult to be applied in real life because of low long-term stability caused by oxidation of metal and a unit cost issue. Because such metal material performs regular reflection, eye fatigue and light blur are caused. The paint containing the white pigment is generally not composed of a material with a high extinction coefficient, and thus it has an insufficient radiative cooling ability because of insufficient infrared emissivity and ultraviolet reflectance.

As an alternative to this problem, Korean Patent No. 2154072 (Patent Document 1) discloses a cooling material capable of rendering a color in radiative cooling, the material including a first material that emits infrared rays and causes radiative cooling; and a second material that absorbs light in the visible region, converts a wavelength thereof, and emits the light having the converted wavelength. However, as in Patent Document 1, the cooling material in which the second material such as a dye or semiconductor material is mixed with the first material that emits infrared rays through electromagnetic resonance has a problem of insufficient radiative cooling ability due to low ultraviolet-ray reflectance.

Therefore, there is a need for research and development on a material that has excellent visible and infrared light reflectance, excellent infrared radiation, and excellent radiative cooling ability.

### DETAILED DESCRIPTION OF THE INVENTION

### TECHNICAL PROBLEM

The present disclosure relates to a colored laminate for radiative cooling and a radiative cooling material including the same. Particular embodiments relate to a colored laminate for radiative cooling which has excellent visible light and infrared-ray reflectance, excellent infrared-ray radiation, excellent cooling effect, and excellent color, and thus is suitable for a vehicle exterior, and a radiative cooling material including the same.

### TECHNICAL SOLUTION

According to an embodiment of the present disclosure, a colored laminate for radiative cooling includes a colored layer including a first thermoplastic resin,
a first light reflecting layer formed on the colored layer and having a reflectance equal to or higher than 80% for light having a wavelength in a range from 780 to 1,300nm and a transmittance equal to or higher than 70% for visible light having a wavelength in a range from 400 to 780nm,
a second light reflecting layer formed on the first light reflecting layer and including a first metal protective layer, a metal layer, and a second metal protective layer sequentially stacked on the first light reflecting layer,
an adhesive layer formed on the second light reflecting layer, and
an infrared-ray radiating layer formed on the adhesive layer.

According to another embodiment of the present disclosure, a radiative cooling material includes the colored laminate for radiative cooling as described above.

According to still another embodiment of the present disclosure, a mobility includes the radiative cooling material as described above.

### ADVANTAGEOUS EFFECTS

The colored laminate for radiative cooling according to embodiments of the present disclosure has excellent reflectance of visible light and infrared-ray and excellent radiation ability of infrared-ray, and thus it has excellent radiative cooling ability. Moreover, the colored laminate for radiative cooling has excellent emissivity at a wavelength of 8 to 14 µm which is the atmospheric window, and thus it has excellent radiative cooling ability. Furthermore, the colored laminate for radiative cooling has excellent radiative cooling ability and excellent color due to low absorption of heat energy by convection, and thus it may be used suitably as a material in various fields that require materials with excellent radiative cooling ability, such as a mobility, especially for the exterior of automobiles.

### BRIEF DESCRIPTION OF THE DRAWINGS

FIG. 1 is a cross-sectional view of a colored laminate for radiative cooling according to an embodiment of the present disclosure;
FIGS. 2 and 3 show results of measuring reflectance of a colored laminate according to an example of the present disclosure; and
FIG. 4 shows an internal temperature result of a model vehicle using the colored laminate for radiative cooling according to an example of the present disclosure.

### BEST MODE FOR CARRYING OUT THE INVENTION

Herein, when one component "includes" a certain component, this means that the one component may further include other components rather than excluding other components, unless specifically stated otherwise.

Herein, when one member is described to be located on a "surface", "top", "one surface", "other surface", or "both surfaces" of another member, this refers not only to a case in which the one member is in contact with said another member, but also to a case in which a third member exists between the two members.

In addition, herein, "a weight average molecular weight" may be measured by a method well known in the art, and it may represent, for example, a value measured by a gel permeation chromatograph (GPC) method.

### Color laminate for radiative cooling

The colored laminate for radiative cooling according to embodiments of the present disclosure include a colored layer; a first light reflecting layer formed on the colored layer; a second light reflecting layer formed on the first light reflecting layer; an adhesive layer formed on the second light reflecting layer; and an infrared-ray radiating layer formed on the adhesive layer.

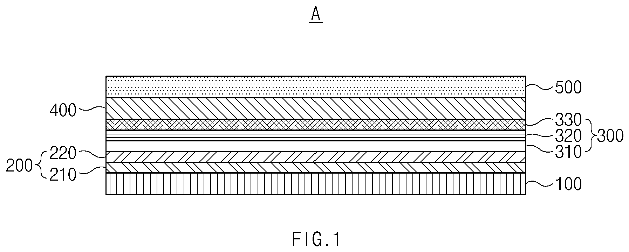

Referring to FIG. 1, the colored laminate A for radiative cooling according to embodiments of the present disclosure includes a stack of the colored layer 100; the first light reflecting layer 200; the second light reflecting layer 300; the adhesive layer 400; and the infrared-ray radiating layer 500 in this order. In this regard, the second light reflecting layer 300 includes a first metal protective layer 310, a metal layer 320, and a second metal protective layer 330 sequentially stacked on the first light reflecting layer 200.

Moreover, the first light reflecting layer 200 may include a form in which first layers 210 and second layers 220 are alternately stacked on top of each other.

### Colored layer

The colored layer is responsible for imparting a color to the laminate.

The colored layer includes a first thermoplastic resin. Specifically, the colored layer includes the first thermoplastic resin, has a color, and may be opaque. In this regard, the colored layer may be opaque. Thus, the laminate containing the colored layer may be applied instead of an exterior paint for a vehicle.

Moreover, the colored layer may emit infrared rays with a long wavelength of 4 to 20 µm in a broadband manner. Thus, the colored layer serves to improve the radiative cooling performance of the laminate by dissipating heat of the laminate containing the colored layer.

The first thermoplastic resin may include one or more polymers selected from a group consisting of acrylonitrile-butadiene-styrene (ABS) resin and polycarbonate (PC). In this regard, the "polymer" may include a homopolymer or a blend or copolymer obtained therefrom.

Moreover, an average thickness of the colored layer may be applied without particular restrictions as long as an average thickness thereof may be generally applied to the exterior of a mobility.

### First light reflecting layer

The first light reflecting layer serves to block heat by reflecting near-infrared light with a wavelength in a range from 780 to 1,300nm.

Specifically, the first light reflecting layer has a reflectance equal to or higher than 80% for light with the wavelength in the range from 780 to 1,300nm and a transmittance equal to or higher than 70% for visible light with a wavelength in a range from 400 to 780nm. Specifically, the first light reflecting layer may have a high reflectance in a range from 80 to 90% for the light with the wavelength in the range from 780 to 1,300nm and a transmittance equal to or higher than 75% or in a range from 80 to 95% for the visible light with the wavelength in the range from 400 to 780nm. Accordingly, the first light reflecting layer has an effect of improving a radiative cooling ability by reflecting the near-infrared light irradiated to the laminate.

In addition, the first light reflecting layer is preferably a polymer-containing layer rather than a metal-containing structure considering economic efficiency. Specifically, the first light reflecting layer may include a form in which the first layers containing a first polymer and the second layers containing a second polymer having a lower refractive index than that of the first layer are alternately stacked on top of each other. When the first light reflecting layer includes the form in which the first layers and the second layers with the lower refractive index than that of the first layer are alternately stacked on top of each other, the first layer with a relatively high refractive index and the second layer with a relatively low refractive index are stacked alternately on top of each other to create interference therebetween and change a travel direction of light, thereby effectively blocking the heat.

The first layer may have a refractive index equal to or higher than 1.4, in a range from 1.6 to 2.2, or in a range from 1.8 to 2.0. When the refractive index of the first layer is within the above range, the first layer and the second layer may create the interference therebetween and change the travel direction of light, thereby improving the radiative cooling ability of the laminate.

The second layer may have a refractive index equal to or higher than 1.3, equal to or higher than 1.5 and lower than 2.1, or equal to or higher than 1.7 and lower than 1.9. When the refractive index of the second layer is within the above range, the first layer and the second layer create the interference therebetween and change the travel direction of light, thereby improving the radiative cooling ability of the laminate.

The first light reflecting layer may have an average thickness in a range from 50 to 300µm or from 75 to 250µm. When the average thickness of the first light reflecting layer is smaller than the above range, hardness of the manufactured laminate may be insufficient or a decrease in near-infrared ray reflectance may occur. When the average thickness exceeds the above range, an increase in reflectance at an unwanted wavelength of the manufactured laminate, a decrease in visible light transmittance, and low economic feasibility caused by less obtainable effects compared to thickness may occur.

### Second light reflecting layer

The second light reflecting layer serves to block the heat by reflecting the infrared light with a wavelength in a range from 1,300 to 2,500nm and to improve durability of the laminate against sunlight.

The second light reflecting layer is formed on the first light reflecting layer and includes the form in which the first metal protective layer, the metal layer, and the second metal protective layer are sequentially stacked on the first light reflecting layer. The second light reflecting layer includes the form in which the first metal protective layer, the metal layer, and the second metal protective layer are sequentially stacked on the first light reflecting layer and improves reflectance for infrared light with a wavelength equal to or higher than 1,300nm, thereby improving a radiative cooling performance of the manufactured laminate.

Each of the first metal protective layer and the second metal protective layer may independently contain at least one selected from a group consisting of indium-doped tin oxide (ITO, In-doped tin oxide), aluminum-doped zinc oxide (AZO, Al-doped Zn oxide), fluorine-doped tin oxide (FTO, Fluorine-doped tin oxide), titanium dioxide (TiO₂), neodymium oxide (Nd₂O₃), and silicon dioxide (SiO₂). When each of the first metal protective layer and the second metal protective layer contains the metal oxide as described above, a problem that the metal layer is exposed to air and is oxidized is prevented, and the visible light transmittance is adjusted.

In addition, each of the first metal protective layer and the second metal protective layer may independently have an average thickness in a range from 15 to 200nm, from 50 to 150nm, or from 30 to 100nm. When the average thickness of each of the first metal protective layer and the second metal protective layer is smaller than the above range, metal in the metal layer may be eluted by an external impact to reduce the durability of the manufactured laminate, or the metal layer may react with air and be easily oxidized to reduce durability of the metal layer, and the visible light transmittance may be reduced. When the average thickness exceeds the above range, the visible light transmittance of the manufactured laminate may be reduced or the near-infrared ray reflectance may be excessively increased.

For example, the metal layer may contain at least one selected from a group consisting of silver (Ag), aluminum (Al), gold (Au), aluminum oxide (Al₂O₃), chromium (Cr), and copper (Cu). When the metal layer contains at least one of the metals described above, the near-infrared ray reflectance of the laminate increases because of light interference.

Additionally, the metal layer may have an average thickness in a range from 1 to 100nm, from 1 to 50nm, from 1 to 30nm, or from 1 to 20nm. When the average thickness of the metal layer is smaller than the above range, the near-infrared ray reflectance of the manufactured laminate may be insufficient. When the average thickness exceeds the above range, the economic feasibility may be low because of the less obtainable effects compared to the thickness.

The second light reflecting layer may have an average thickness in a range from 30 to 300nm, from 50 to 200nm, or from 50 to 150nm. When the average thickness of the second light reflecting layer is smaller than the above range, the near-infrared ray reflectance and the visible light transmittance of the manufactured laminate may be insufficient. When the average thickness exceeds the above range, the economic feasibility may be low because of less obtainable effects compared to the thickness of the second light reflecting layer.

### Adhesive layer

The adhesive layer serves to bond the second light reflecting layer and the infrared-ray radiating layer to each other.

Additionally, the adhesive layer may include an ultraviolet light curable adhesive or a moisture curable adhesive. The adhesive layer may include at least one selected from a group consisting of an acrylic adhesive, a silicone-based adhesive, and a urethane-based adhesive.

The ultraviolet light curable adhesive may be used without a particular limitation as long as it is an adhesive that is generally cured by the ultraviolet light. For example, the ultraviolet light curable adhesive may include an acrylic monomer and an ultraviolet-ray photoinitiator.

The acrylic monomer may be used without a particular limitation as long as it is an acrylic monomer that is generally applicable to the ultraviolet light curable adhesive, and, for example, may include at least one selected from a group consisting of an alkyl (meth)acrylate monomer and an amide group-containing unsaturated (meth)acrylic monomer.

The ultraviolet-ray photoinitiator may be used without a particular limitation as long as it is a photoinitiator that is generally applicable to the ultraviolet light curable adhesive, and it may be, for example, an acyl phosphine oxide-based compound.

The moisture curable adhesive may be used without a particular limitation as long as it is an adhesive that is generally cured by moisture in air. For example, the moisture curable adhesive may be the urethane-based adhesive. In this regard, the urethane-based adhesive may include a urethane-based prepolymer and polyisocyanate.

In this regard, the urethane-based prepolymer may contain a hydroxyl group and may serve to cure the adhesive by reacting with polyisocyanate. Additionally, the urethane-based prepolymer may be used without a particular limitation as long as it is generally applicable to the urethane-based adhesive.

Additionally, the polyisocyanate may be used without a particular limitation as long as it is generally applicable to the urethane-based adhesive.

The adhesive layer may have an average thickness in a range from 0.1 to 1.0µm, from 0.15 to 0.75µm, or from 0.2 to 0.5µm. When the average thickness of the adhesive layer is smaller than the above range, the adhesion between the second light reflecting layer and the infrared-ray radiating layer may be poor. When the average thickness exceeds the above range, an infrared-ray absorptivity of the manufactured laminate may increase.

### Infrared-ray radiating layer

The infrared-ray radiating layer may selectively radiate a portion of far-infrared light with a wavelength in a range from 4 to 20µm. Accordingly, the infrared-ray radiating layer serves to improve the radiative cooling performance of the laminate by dissipating the heat within the laminate containing the same. In this regard, a wavelength at which the infrared-ray radiating layer selectively radiates the far-infrared light may be in a range from 8 to 14µm.

The infrared-ray radiating layer may contain a second thermoplastic resin. In this regard, the second thermoplastic resin may have different optical properties, specifically, refractive index and/or extinction coefficient, from those of the first thermoplastic resin included in the colored layer. That is, the infrared-ray radiating layer may include the second thermoplastic resin that has different optical properties from those of the first thermoplastic resin.

Accordingly, the colored layer and the infrared-ray radiating layer respectively including the first thermoplastic resin and the second thermoplastic resin may have different optical properties. Thus, wavelengths of light which can be radiated and/or reflected from the colored layer and the infrared-ray radiating layer, respectively, may be different from each other. The laminate for radiative cooling according to embodiments of the present disclosure which includes the colored layer and the infrared-ray radiating layer respectively including the two types of thermoplastic resins with different optical properties as described above has very excellent radiative cooling ability.

The second thermoplastic resin may include, for example, at least one selected from a group consisting of polyester, acrylic resin, polyolefin, polyurethane, polystyrene (PS), cellulose-based resin, silicone, and copolymers thereof. Specifically, the second thermoplastic resin may include at least one type of polymer selected from a group consisting of polypropylene (PP), poly(methyl methacrylate) (PMMA), polymethylpentene (PMP), ethylene tetrafluoroethylene (ETFE), polydimethylsiloxane (PDMS), polylactic acid (PLA), polyethylene terephthalate (PET), and copolymers thereof. In this regard, the "polymer" may include a homopolymer or a blend or a copolymer obtained therefrom.

In addition, the second thermoplastic resin may have an emissivity in a range from 75 to 95% or from 80 to 90% for light of a wavelength in the range from 8 to 14µm. That is, the second thermoplastic resin may have excellent emissivity for light of the wavelength in the range from 8 to 14µm and may selectively radiate the portion of the far-infrared light having the long wavelength. When the emissivity of the second thermoplastic resin is out of the above range, a surface temperature of the laminate may increase.

The infrared-ray radiating layer may have an average thickness of 10 to 180 µm, 20 to 150 µm, 50 to 120 µm, or 60 to 100 µm. When the average thickness of the infrared-ray radiating layer is below the above range, the infrared-ray radiating layer may be thin, thereby causing problems with insufficient hardness and radiation performance of the manufactured laminate. When the average thickness exceeds the above range, the visible light transmittance of the infrared-ray radiating layer may be reduced or the obtainable effect may be small compared to the thickness, which may result in poor economic feasibility.

As described above, the colored laminate for radiative cooling according to embodiments of the present disclosure has excellent reflectance of visible light and near-infrared-ray with a wavelength of 750 to 2,500 nm, and excellent radiation ability of infrared-ray with a wavelength of 2.5 µm or larger, and thus has excellent radiative cooling ability. Moreover, the colored laminate for radiative cooling has excellent selective emissivity at a wavelength of 8 to 14 µm which is an atmospheric window, and thus has excellent radiative cooling ability. Furthermore, the colored laminate for radiative cooling has excellent radiative cooling ability and excellent color due to low absorption of heat energy by convection, and thus it may be used suitably as a material in various fields that require materials with excellent radiative cooling ability, such as a mobility, especially for the exterior of automobiles.

### Radiative cooling material

The radiative cooling material in accordance with embodiments of the present disclosure includes the colored laminate for radiative cooling.

For example, the radiative cooling material may be a radiative cooling material for an exterior, and specifically, it may be applied to a radiative cooling material for the exterior of a mobility. When the radiative cooling material is applied to the exterior of the mobility, the colored layer of the radiative cooling material may be deposited on a surface of the mobility, and the infrared-ray radiating layer may be the outermost layer. Thus, the radiative cooling effect may be further improved by the laminate absorbing the heat inside the mobility under the colored layer and releasing the heat to the outside.

As described above, the radiative cooling material has excellent visible light and infrared-ray reflectance and excellent infrared-ray radiation, and thus has excellent radiative cooling ability. Moreover, the radiative cooling material has an excellent emissivity at a wavelength of 8 to 14 µm, which is the atmospheric window, and thus has excellent radiative cooling ability. Furthermore, the radiative cooling material has excellent radiative cooling ability and excellent color due to low absorption of heat energy by convection, and thus it may be suitably used as a material in various fields that require materials with excellent radiative cooling ability, such as the mobility, especially for the automobile exterior.

### Mobility

The mobility of embodiments of the present disclosure includes the radiative cooling material. Thus, the mobility has excellent radiative cooling ability, thereby enabling saving of cooling energy in summer, and thus achieving excellent energy efficiency.

In this regard, the mobility may include, for example, cars, aircraft, trains, ships, or various mobile robots.

### MODE FOR CARRYING OUT THE INVENTION

Hereinafter, embodiments of the present disclosure are described in more detail through examples. However, these examples are only intended to help understand the embodiments of the present disclosure, and the scope of the present disclosure is not limited to these examples in any way.

### Manufacturing Example 1. Manufacturing of laminate

As the first light reflecting layer, a first light reflecting layer with an average thickness of 75µm (transmittance for visible light (wavelength 400-780nm): 88% and reflectance for near-infrared light (wavelength 780-1300nm): 80%) (manufacturer: Toray Film, product name: PICASUS, high refractive index layer and low refractive index layer alternately stacked, each layer made of polymer) was used.

The first metal protective layer was formed on the first light reflecting layer to have an average thickness of 0.065µm (65nm) via a deposition method using an indium-doped tin oxide (ITO) target under an argon atmosphere, the metal layer was formed on the first metal protective layer to have an average thickness of 0.01µm (10nm) via a metal deposition method using an Ag planar target under the argon atmosphere, and the second metal protective layer was formed on the metal layer to have an average thickness of 0.065µm (65nm) using an ITO in the same manner as the formation of the first metal protective layer to manufacture a first laminate.

Thereafter, the urethane-based adhesive was applied on the second metal protective layer to form an adhesive layer with an average thickness of 0.2µm.

Thereafter, the infrared-ray radiating layer with an average thickness of 100µm composed of the PMMA (weight average molecular weight (Mw): 52,000g/mol) was stacked on the adhesive layer to manufacture a second laminate.

### Manufacturing Examples 2 to 7

The laminate was manufactured in the same manner as in Manufacturing Example 1, except that a thickness and a composition of each layer were adjusted as shown in Table 1.

**[Table 1]**

| | Thickness of first light reflecting layer (µm) | Thickness of each layer within second light reflecting layer (µm) | | | Thickness of adhesive layer (µm) | Thickness of infrared-ray radiating layer (µm) |
|---|---|---|---|---|---|---|
| | | First metal protective layer | Metal layer | Second metal protective layer | | |
| Manufacturing Example 1 | 75 | 0.065 | 0.01 | 0.065 | 0.2 | 100 |
| Manufacturing Example 2 | 75 | 0.065 | - | - | 0.2 | 100 |
| Manufacturing Example 3 | 75 | 0.065 | 0.01 | 0.065 | - | - |
| Manufacturing Example 4 | - | 0.065 | 0.01 | 0.65 | 0.2 | 100 |
| Manufactur ing Example 5 | 75 | 0.065 | 0.01 | 0.065 | 0.2 | 50 |
| Manufacturing Example 6 | 75 | 0.065 | 0.01 | 0.065 | 0.2 | 200 |
| Manufacturing Example 7 | 75 | - | - | - | 0.2 | 100 |

### Test Example 1: Characteristic evaluation

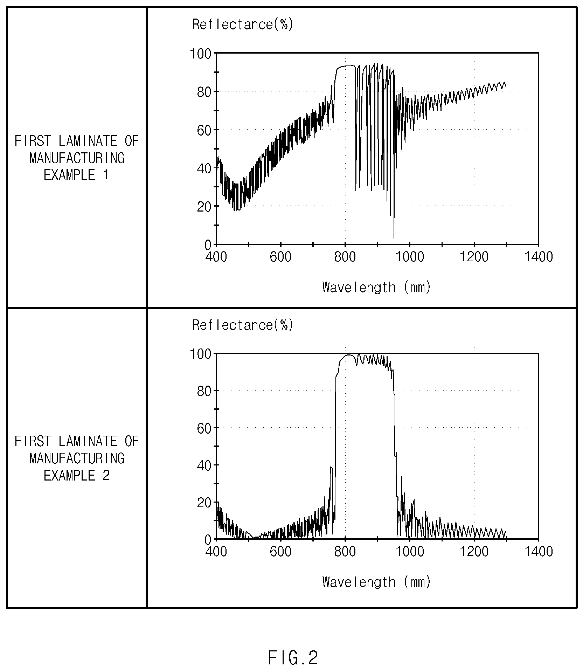

The physical properties of the laminate in the Manufacturing Example were evaluated in a following manner, and the results are shown in Table 2 and FIG. 2.

Specifically, after mounting an integrating sphere on an ultraviolet-visible spectrophotometer (UV-VIS spectrophotometer) and a Fourier Transform Infrared-ray (FT-IR) spectrometer, the reflectance, the emissivity, and the transmittance of the laminate in the Manufacturing Example at a wavelength of 0.2 to 20 µm were calculated, and then an average transmittance, an average emissivity, and an average reflectance were calculated. In this regard, the reflectance measurement result of each of the first laminate of Manufacturing Example 1 and the first laminate of Manufacturing Example 2 is shown in FIG. 2.

**[Table 2]**

| | Average reflectance (%) at wavelength of 0.8 to 2.5 µm | Average transmittance (%) at wavelength of 0.4 to 0.8 µm | Average emissivity (%) at wavelength of 4 to 20 µm |
|---|---|---|---|
| Manu-facturing Example 1 | 80 | 80 | 90 |
| Manu-facturing Example 2 | 60 | 80 | 90 |
| Manu-facturing Example 3 | 77 | 83 | 10 |
| Manu-facturing Example 4 | 50 | 90 | 90 |
| Manu-facturing Example 5 | 75 | 82 | 70 |
| Manu-facturing Example 6 | 82 | 75 | 90 |
| Manu-facturing Example 7 | 50 | 90 | 90 |

As shown in Table 2 and FIG. 2, the laminate of Manufacturing Example 1 has a selective emissivity of a significantly high value of 90% at the wavelength of 8 to 14 µm, which is the atmospheric window, a broadband emissivity of a significantly high value of 90% at the wavelength of 4 to 20 µm, and a reflectance as high as 80% for the visible light with a wavelength of 0.4 to 0.8 µm and thus is expected to have excellent radiative cooling ability.

In particular, as shown in FIG. 2, compared to the first laminate in Manufacturing Example 2 where the first light reflecting layer includes only an ITO single layer and thus is thin, the first laminate in Manufacturing Example 1 has a significantly higher reflectance of over 50% for the infrared-ray with a wavelength of 1 µm or greater, and thus is expected to have superior radiative cooling performance.

### Present Example 1. Manufacturing of colored laminate

A colored laminate for radiative cooling was manufactured by stacking a black colored layer (manufacturing company: Polychem, product name: ABS sheet, average thickness: 100µm) on the first light reflecting layer of the second laminate in Manufacturing Example 1.

### Comparative Example 1.

Only a black colored film (manufacturing company: Polychem, product name: ABS sheet, average thickness: 100µm) was used.

### Test Example 2: Characteristic evaluation

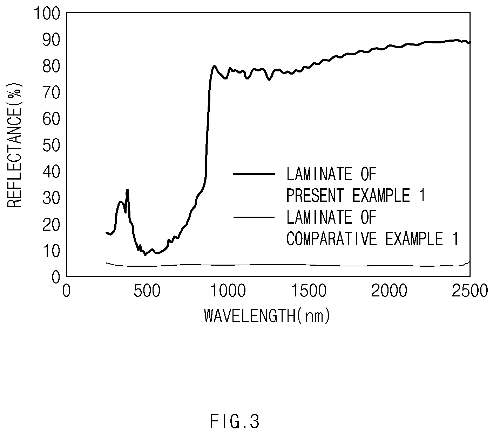

The physical properties of the laminate of each of Present Example 1 and the film of Comparative Example 1 were measured in terms of the reflectance in the same manner as in Test Example 1. The results are shown in FIG. 3.

As shown in FIG. 3, the laminate of Present Example 1 has high reflectance at a wavelength of 1 µm or greater, and thus is determined to have excellent radiative cooling performance.

On the other hand, compared to the laminate of Present Example 1, the colored film of Comparative Example 1 has a relatively significantly lower reflectance and is therefore expected to have relatively very poor radiative cooling ability.

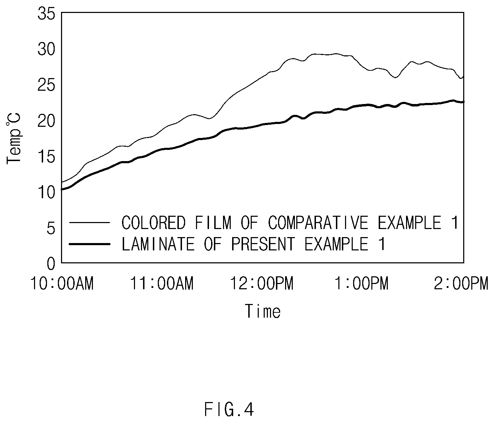

Moreover, a 13:1 scaled mock-up of the Genesis G80 vehicle was manufactured as a model vehicle which in turn was placed outdoors. Then, an internal temperature of the model vehicle was measured over time. The results are shown in FIG. 4.

As shown in FIG. 4, compared to the colored film of Comparative Example 1, the average temperature inside the model vehicle including the laminate of Present Example 1 was lower by at least 3°C, indicating that the laminate of embodiments of the present disclosure had excellent radiative cooling ability.

## Claims

1. A colored laminate for radiative cooling, the colored laminate comprising:
a colored layer comprising a first thermoplastic resin;
a first light reflecting layer on the colored layer and having a reflectance equal to or higher than 80% for light having a wavelength in a range from 780 to 1,300nm and a transmittance equal to or higher than 70% for visible light having a wavelength in a range from 400 to 780nm;
a second light reflecting layer on the first light reflecting layer, the second light reflecting layer comprising a first metal protective layer, a metal layer, and a second metal protective layer sequentially stacked on the first light reflecting layer;
an adhesive layer on the second light reflecting layer; and
an infrared-ray radiating layer on the adhesive layer.

2. The colored laminate for radiative cooling of claim 1, wherein the first thermoplastic resin comprises at least one polymer selected from the group consisting of acrylonitrile-butadiene-styrene (ABS) resin and polycarbonate (PC).

3. The colored laminate for radiative cooling of claim 1, wherein the first light reflecting layer comprises a stack in which first layers including a first polymer and second layers including a second polymer having a lower refractive index than a refractive index of the first layers are alternately stacked on top of each other.

4. The colored laminate for radiative cooling of claim 1, wherein:
the first light reflecting layer has an average thickness of 50 to 300 µm; and
the second light reflecting layer has an average thickness of 30 to 300 nm.

5. The colored laminate for radiative cooling of claim 1, wherein each of the first metal protective layer and the second metal protective layer independently comprises at least one selected from the group consisting of indium-doped tin oxide (ITO), aluminum-doped zinc oxide (AZO), fluorine-doped tin oxide (FTO), titanium dioxide (TiO₂), neodymium oxide (Nd₂O₃), and silicon dioxide (SiO₂).

6. The colored laminate for radiative cooling of claim 1, wherein the metal layer comprises at least one selected from the group consisting of silver (Ag), aluminum (Al), gold (Au), aluminum oxide, chromium (Cr), and copper (Cu).

7. The colored laminate for radiative cooling of claim 1, wherein the adhesive layer comprises an ultraviolet-ray curable adhesive or a moisture curable adhesive.

8. The colored laminate for radiative cooling of claim 1, wherein the adhesive layer comprises at least one selected from the group consisting of acrylic adhesives, silicone-based adhesives, and urethane-based adhesives.

9. The colored laminate for radiative cooling of claim 1, wherein:
the adhesive layer has an average thickness of 0.1 to 1.0 µm; and
the infrared-ray radiating layer has an average thickness of 10 to 180 µm.

10. The colored laminate for radiative cooling of claim 1, wherein the infrared-ray radiating layer comprises a second thermoplastic resin having different optical properties from optical properties of the first thermoplastic resin.

11. A radiative cooling material comprising the colored laminate for radiative cooling of one of claims 1 to 10.

12. The radiative cooling material of claim 11, wherein the radiative cooling material is used for an exterior.

13. A mobility comprising the radiative cooling material of claim 11.
